# EUROPEAN PATENT APPLICATION

(11) **EP 4 485 832 A1**
(43) Date of publication of application: **01.01.2025**
(21) Application number: 23759161.5
(22) Date of filing: 21.02.2023
(51) Int. Cl.: H04L 5/00

(54) **INFORMATION RESPONDING METHOD, INFORMATION SENDING METHOD, TERMINAL, AND NETWORK-SIDE DEVICE**

(30) Priority: 25.02.2022 CN 202210176816
(71) Applicant: VIVO MOBILE COMMUNICATION CO., LTD., Dongguan, Guangdong 523863 (CN)
(72) Inventor: JIANG, Lu, Dongguan, Guangdong 523863 (CN); CHEN, Xiaohang, Dongguan, Guangdong 523863 (CN)
(74) Representative: Conti, Marco
(86) International application number: PCT/CN2023/077394
(87) International publication number: WO 2023/160536

(57) **Abstract**

This application pertains to the field of communication technologies, and discloses an information responding method, an information sending method, a terminal, and a network-side device. The information responding method in embodiments of this application includes: obtaining, by a terminal, indication information sent by a network-side device; and performing, by the terminal, a target operation in response to the indication information, where the indication information is used to indicate at least one of the following: information about an antenna element turned on and/or off by the network-side device; information about an antenna port turned on and/or off by the network-side device; and information about a signal turned on and/or off by the network-side device.

## Description

### CROSS-REFERENCE TO RELATED APPLICATIONS

This application claims priority to Chinese Patent Application No. 202210176816.4, filed in China on February 25, 2022, which is incorporated herein by reference in its entirety.

### TECHNICAL FIELD

This application pertains to the field of communication technologies, and specifically relates to an information responding method, an information sending method, a terminal, and a network-side device.

### BACKGROUND

In a case that a network-side device is in an idle state or has low load, the network-side device has a redundant transmission capability, resulting in waste of power consumption. However, in a case that the network-side device resumes high load, the network-side device requires a higher transmission capability, and needs to turn on more antenna elements, ports, or signals to meet the requirement.

To meet the foregoing requirement, the network-side device may turn on and/or off the antenna elements, ports, or signals. However, after the network-side device turns on and/or off the antenna elements, ports, or signals, normal communication of a terminal may be affected, and hence reliability of data transmission is affected. This is an urgent problem to be resolved.

### SUMMARY

Embodiments of this application provide an information responding method, an information sending method, a terminal, and a network-side device to resolve a problem that reliability of data transmission of a terminal is affected after a network-side device turns on and/or off antenna elements, ports, or signals.

According to a first aspect, an information responding method is provided, where the method includes:
obtaining, by a terminal, indication information sent by a network-side device; and
performing, by the terminal, a target operation in response to the indication information, where
the indication information is used to indicate at least one of the following:
   information about an antenna element turned on and/or off by the network-side device;
   information about an antenna port turned on and/or off by the network-side device; and
   information about a signal turned on and/or off by the network-side device.

According to a second aspect, an information sending method is provided and includes:
performing, by a network-side device, an operation of turning on and/or off at least one of an antenna element, an antenna port, and a signal; and
sending, by the network-side device, indication information, where the indication information is used to indicate at least one of the following:
   information about the antenna element turned on and/or off by the network-side device;
   information about the antenna port turned on and/or off by the network-side device; and
   information about the signal turned on and/or off by the network-side device.

According to a third aspect, an information responding apparatus is provided and includes:
an obtaining module, configured to obtain indication information sent by a network-side device; and
an execution module, configured to perform a target operation in response to the indication information, where
the indication information is used to indicate at least one of the following:
   information about an antenna element turned on and/or off by the network-side device;
   information about an antenna port turned on and/or off by the network-side device; and
   information about a signal turned on and/or off by the network-side device.

According to a fourth aspect, an information sending apparatus is provided and includes:
an execution module, configured to perform an operation of turning on and/or off at least one of an antenna element, an antenna port, and a signal; and
a sending module, configured to send indication information, where the indication information is used to indicate at least one of the following:
   information about the antenna element turned on and/or off by the network-side device;
   information about the antenna port turned on and/or off by the network-side device; and
   information about the signal turned on and/or off by the network-side device.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The communication interface is configured to obtain indication information sent by a network-side device, where the indication information is used to indicate at least one of the following: information about an antenna element turned on and/or off by the network-side device; information about an antenna port turned on and/or off by the network-side device; and information about a signal turned on and/or off by the network-side device. The processor is configured to perform a target operation in response to the indication information.

According to a seventh aspect, a network-side device is provided. The terminal includes a processor and a memory. The memory stores a program or instructions capable of running on the processor. When the program or instructions are executed by the processor, the steps of the method according to the second aspect are implemented.

According to an eighth aspect, a network-side device is provided and includes a processor and a communication interface. The communication interface is configured to send indication information, where the indication information is used to indicate at least one of the following: information about an antenna element turned on and/or off by the network-side device; information about an antenna port turned on and/or off by the network-side device; and information about a signal turned on and/or off by the network-side device. The processor is configured to perform an operation of turning on and/or off at least one of the antenna element, the antenna port, and the signal.

According to a ninth aspect, a communication system is provided and includes a terminal and a network-side device. The terminal may be configured to perform the steps of the information responding method according to the first aspect. The network-side device may be configured to perform the steps of the information sending method according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the steps of the method according to the first aspect or implement the steps of the method according to the second aspect.

According to a twelfth aspect, a computer program or program product is provided. The computer program or program product is stored in a storage medium. The computer program or program product is executed by at least one processor to implement the steps of the method according to the first aspect or the second aspect.

According to a thirteenth aspect, a communication device is provided and configured to perform the method according to the first aspect or the second aspect.

In the embodiments of this application, the terminal obtains the indication information sent by the network-side device; and the terminal performs the target operation in response to the indication information, where the indication information is used to indicate at least one of the following: the information about the antenna element turned on and/or off by the network-side device; the information about the antenna port turned on and/or off by the network-side device; and the information about the signal turned on and/or off by the network-side device. After turning on and/or off the antenna element, the antenna port, or the signal, the network-side device may notify the terminal by using the indication information, so that the terminal performs the corresponding target operation based on the indication information. For example, the terminal is instructed to adjust a behavior such as measurement, transmission, or monitoring of a resource associated with the antenna element or the antenna port, so that the terminal selects an appropriate antenna element or antenna port based on the indication information to perform data transmission, thereby ensuring reliability of data transmission.

### BRIEF DESCRIPTION OF DRAWINGS

FIG. 1 is a block diagram of a wireless communication system to which an embodiment of this application may be applied;
FIG. 2 is a flowchart of an information responding method according to an embodiment of this application;
FIG. 3 is a flowchart of an information sending method according to an embodiment of this application;
FIG. 4a and FIG. 4b are schematic diagrams for turning on or off an antenna panel according to an embodiment of this application;
FIG. 5 is a structural diagram of an information responding apparatus according to an embodiment of this application;
FIG. 6 is a structural diagram of an information sending apparatus according to an embodiment of this application;
FIG. 7 is a structural diagram of a communication device according to an embodiment of this application;
FIG. 8 is a structural diagram of a terminal according to an embodiment of this application; and
FIG. 9 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

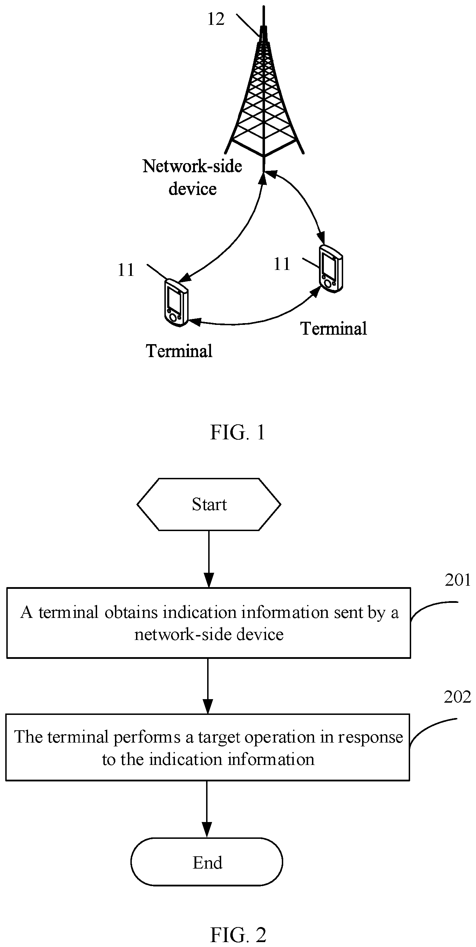

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. An information responding method provided in the embodiments of this application is hereinafter described in detail by using some embodiments and application scenarios thereof with reference to the accompanying drawings.

As shown in FIG. 2, an embodiment of this application provides an information responding method. The method includes the following steps.

Step 201: A terminal obtains indication information sent by a network-side device, where the indication information is used to indicate at least one of the following:
information about an antenna element turned on and/or off by the network-side device;
information about an antenna port turned on and/or off by the network-side device; and
information about a signal turned on and/or off by the network-side device.

In the foregoing description, the signal turned on and/or off may be a reference signal, an uplink channel, or an uplink signal. A plurality of antenna elements may be assembled into an antenna panel.

Step 202: The terminal performs a target operation in response to the indication information.

In this embodiment, the terminal obtains the indication information sent by the network-side device; and the terminal performs the target operation in response to the indication information, where the indication information is used to indicate at least one of the following: the information about the antenna element turned on and/or off by the network-side device; the information about the antenna port turned on and/or off by the network-side device; and the information about the signal turned on and/or off by the network-side device. After turning on and/or off the antenna element, the antenna port, or the signal, the network-side device may notify the terminal by using the indication information, so that the terminal performs the corresponding target operation based on the indication information. For example, the terminal is instructed to adjust a behavior such as measurement, transmission, or monitoring of a resource associated with the antenna element or the antenna port, so that the terminal selects an appropriate antenna element or antenna port based on the indication information to perform data transmission, thereby ensuring reliability of data transmission.

In this application, turning on may be understood as activation, and turning off may be understood as deactivation.

A manner of carrying the indication information may be one of the following:
radio resource control (Radio Resource Control, RRC) signaling, for example, broadcast or dedicated (dedicated) RRC signaling dedicated to carrying the indication information;
downlink control information (Downlink Control Information, DCI), such as group common or UE-specific DCI (group common or UE-specific DCI); and
a medium access control control element (Medium Access Control Control Element, MAC CE).

In an embodiment of this application, the information about the antenna element includes at least one of the following:
(1) an identifier of the antenna element, for example, a number of the antenna element;
(2) a start antenna element and a quantity of antenna elements, for example, n1 elements that are turned off/on, with sequentially decreasing or increasing element identifiers counting from an element identifier of the start antenna element, where n1 is the quantity of antenna elements;
(3) a first mode of the antenna element, where the first mode of the antenna element corresponds to at least one antenna element, for example, if the first mode corresponds to a first element and a second element, the first element and the second element are correspondingly turned off in a case that the network-side device turns off the first mode of the antenna element;
(4) a second mode of the antenna element, where the second mode of the antenna element is associated with a time when the antenna element is turned on and/or off, for example, if the first element is on for duration T 1 and off for duration t2 in the second mode, the first element is on for duration t1 and off for duration t2 correspondingly in each period in a case that the network-side device turns on the second mode of the antenna element with T1 as a period;
(5) on and/or off duration of the antenna element; and
(6) not turning off any antenna element.

In an embodiment of this application, the information about the antenna port includes at least one of the following:
(1) an identifier of the antenna port, for example, a number of the antenna port;
(2) a start antenna port and a quantity of antenna ports, for example, n2 ports that are turned off/on, with sequentially decreasing or increasing port identifiers counting from a port identifier of the start antenna port, where n2 is the quantity of antenna ports;
(3) a first mode of the antenna port, where the first mode of the antenna port corresponds to at least one antenna port, for example, if the first mode of the antenna port corresponds to a first port and a second port, the first port and the second port are correspondingly turned off in a case that the network-side device turns off the first mode of the antenna port;
(4) a second mode of the antenna port, where the second mode of the antenna port is associated with a time when the antenna port is turned on and/or off, for example, if the first port is on for duration t3 and off for duration t4 in the second mode of the antenna port, the first port is on for duration t3 and off for duration t4 correspondingly in each period in a case that the network-side device turns on the second mode of the antenna port with T2 as a period;
(5) on and/or off duration of the antenna port; and
(6) not turning off any antenna port.

In an embodiment of this application, the indication information is used to indicate the information about the antenna element turned off by the network-side device; and
the target operation includes at least one of the following:
(1) canceling measurement of a reference signal resource associated with a first antenna element, including channel state information (Channel State Information, CSI) measurement, layer 1 signal to interference plus noise ratio (Layer 1 Signal to Interference plus Noise Ratio, SINR) measurement, radio resource management (Radio resource management, RRM), or the like, where the first antenna element is the antenna element turned off by the network-side device;
(2) canceling monitoring of a physical downlink control channel (Physical Downlink Control Channel, PDCCH) on a control resource set (Control resource set, CORESET) associated with the first antenna element;
(3) canceling uplink transmission on a resource corresponding to the first antenna element; and
(4) in a case that the terminal receives a physical downlink shared channel (Physical downlink shared channel, PDSCH), performing rate matching without skipping a reference signal resource corresponding to the first antenna element.

In an embodiment of this application, the indication information is used to indicate the information about the antenna port turned off by the network-side device; and correspondingly, the target operation includes at least one of the following:
(1) canceling measurement of a reference signal resource associated with a first antenna port, including CSI measurement, layer 1 reference signal received power (Layer 1 Reference Signal Received Power, L1-RSRP) measurement, SINR measurement, RRM, or the like, where the first antenna port is the antenna port turned off by the network-side device;
(2) canceling monitoring of a physical downlink control channel PDCCH on a control resource set (Control resource set, CORESET) associated with the first antenna port;
(3) canceling uplink transmission on a resource corresponding to the first antenna port; and
(4) in a case that the terminal receives a physical downlink shared channel PDSCH, performing rate matching without skipping a reference signal resource corresponding to the first antenna port.

In an embodiment of this application, the information about the signal includes at least one of information about a reference signal, an uplink channel, and an uplink signal.

The information about the reference signal includes at least one of the following:
(1) an identifier of the reference signal, for example, a number of the reference signal;
(2) a start reference signal and a quantity of reference signals, for example, n3 reference signals that are turned off/on, with sequentially decreasing or increasing reference signal identifiers counting from an identifier of the start reference signal, where n3 is the quantity of reference signals;
(3) a first mode of the reference signal, where the first mode of the reference signal corresponds to at least one reference signal, for example, if the first mode of the reference signal corresponds to a first reference signal and a second reference signal, the first reference signal and the second reference signal are correspondingly turned off in a case that the network-side device turns off the first mode of the reference signal;
(4) a second mode of the reference signal, where the second mode of the reference signal is associated with a time when the reference signal is turned on and/or off, for example, if the first reference signal is on for duration t5 and off for duration t6 in the second mode of the reference signal, the first reference signal is on for duration t5 and off for duration t6 correspondingly in each period in a case that the network-side device turns on the second mode of the reference signal with T3 as a period;
(5) on and/or off duration of the reference signal;
(6) a rate matching mode of the reference signal; and
(7) not turning off any reference signal.

In an embodiment of this application, the indication information is used to indicate the information about the reference signal turned off by the network-side device, and a first reference signal is the reference signal turned off by the network-side device; and correspondingly, the target operation includes at least one of the following:
(1) canceling measurement of a resource corresponding to the first reference signal, including CSI measurement, L 1-RSRP measurement, SINR measurement, RRM, or the like;
(2) canceling monitoring of a PDCCH on a CORESET corresponding to the first reference signal;
(3) in a case that the terminal receives a PDSCH, performing rate matching without skipping the resource corresponding to the first reference signal; and
(4) canceling uplink transmission on the resource corresponding to the first reference signal.

In an embodiment of this application, that a terminal obtains indication information sent by a network-side device includes:
the terminal performs monitoring based on a preset period or based on an event trigger to obtain the indication information sent by the network-side device.

The preset period is a period configured by the network-side device, for example, a period configured by the network-side device for turning off the antenna panel, the antenna port, or the signal, or a monitoring period of a PDCCH carrying the indication information.

The event includes one of the following:
(1) a preset timer expires; and
(2) layer 1 reference signal received power L1-RSRP or an SINR of at least one reference signal measured by the terminal in a target cell is lower than a first threshold, for example, the L1-RSRP or SINR of the at least one reference signal measured by the terminal in the target cell in at least one time unit is lower than the first threshold, where the target cell is a primary cell or a secondary cell of the terminal, the time unit may be a slot (slot), a symbol (symbol), or a subframe (subframe), and the time unit is configured by the network-side device.

The event may alternatively be: L1-RSRP or an SINR measured for i times in at least one time unit is lower than a second threshold, where i is configured by the network-side device, and i ≥ 1.

In an embodiment of this application, before the terminal obtains the indication information, the method further includes:
the terminal receives configuration information, where the configuration information includes information about at least one of the antenna element, the antenna port, and the signal.

The configuration information includes at least one of the following:
a global number of each antenna element, for example, a global index of the antenna element;
a global number of each antenna port, for example, a global index of the antenna port;
a global number of each reference signal, for example, a global index of the reference signal or a resource group index of the reference signal;
an association relationship between each antenna element and CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

In the foregoing description, the reference signal includes at least one of a synchronization signal and PBCH block (Synchronization Signal and PBCH block, SSB), a tracking reference signal (tracking reference signal, TRS), a sounding reference signal (Sounding Reference Signal, SRS), and a channel state information reference signal (Channel State Information Reference Signal, CSI-RS). The CSI-RS includes a periodic (periodic) CSI-RS, a semi-persistent (semi-persistent) CSI-RS, or an aperiodic (aperiodic) CSI-RS. The association relationship may be a quasi co-location (Quasi co-location, QCL) relationship. The downlink transmission includes a PDCCH or a PDSCH. The uplink transmission includes at least one of configured grant (Configured Grant, CG) transmission, an SRS, a PUCCH, a PUSCH, a PRACH, and a scheduling request (Scheduling Request, SR).

In an embodiment of this application, the indication information provides an indication by using at least one of the following:
(1) using a bitmap to indicate the antenna element turned on and/or off by the network-side device, and mapping a bit to the antenna element on a one-to-one basis, where the antenna element may be an element, or may be an element group, that is, each bit corresponds to one antenna element, or may correspond to one antenna element group;
(2) using a bitmap to indicate the antenna port turned on and/or off by the network-side device, and mapping a bit to the antenna port on a one-to-one basis, where the antenna port may be a port, or may be a port group, that is, each bit corresponds to one port, or may correspond to one port group, and
   for example, 8 bits are used to indicate 8 ports, that is, to indicate on/off states of "port (port) 1" to "port 8", where "1" means on, "0" means off, and information bits of "01111101" mean that "port 2" and "port 8" are off and that the other ports are on;
(3) using a bitmap to indicate the reference signal turned on and/or off by the network-side device, and mapping a bit to the reference signal on a one-to-one basis;
(4) using a binary value to indicate an identifier of the antenna element turned on and/or off by the network-side device, that is, using the binary value to directly indicate the identifier of the antenna element that is turned on or off;
(5) using a binary value to indicate an identifier of the antenna port turned on and/or off by the network-side device, that is, using the binary value to directly indicate the identifier of the antenna port that is turned on or off, where for example, the network-side device indicates a port number of a port that is turned off to the terminal, and if binary values included in the indication information are "1111101010", "1111101100", and "1111110000", it indicates that ports whose port numbers are "1002", "1004", and "1008" are turned off;
(6) using a binary value to indicate an identifier of the reference signal turned on and/or off by the network-side device, that is, using the binary value to directly indicate the identifier of the reference signal that is turned on or off;
(7) using a binary value to indicate a quantity of antenna elements turned on and/or off by the network-side device, where for example, a binary value "00" represents that one antenna element is turned on, and "01" represents that two antenna elements are turned on;
(8) using a binary value to indicate a quantity of antenna ports turned on and/or off by the network-side device; and
(9) using a binary value to indicate a quantity of reference signals turned on and/or off by the network-side device.

UE does not expect the network to trigger CSI-RS reception, PDSCH reception, PUSCH transmission, PUCCH transmission, SRS transmission, or CSI reporting by using a dynamic grant (grant), where the uplink/downlink transmission is associated with the antenna element, the antenna port, or the reference signal turned off that is indicated by the indication information.

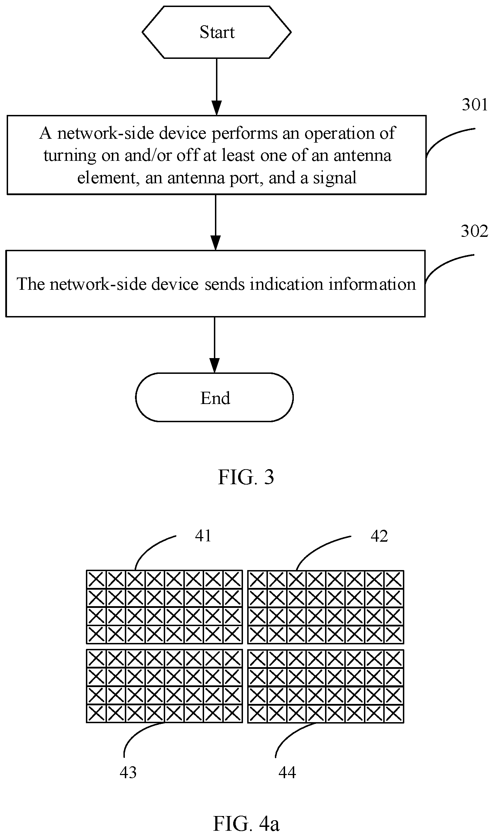

As shown in FIG. 3, an embodiment of this application provides an information sending method. The method includes the following steps.

Step 301: A network-side device performs an operation of turning on and/or off at least one of an antenna element, an antenna port, and a signal.

Step 302: The network-side device sends indication information, where the indication information is used to indicate at least one of the following:
information about the antenna element turned on and/or off by the network-side device;
information about the antenna port turned on and/or off by the network-side device; and
information about the signal turned on and/or off by the network-side device.

In this embodiment, the network-side device performs the operation of turning on and/or off at least one of the antenna element, the antenna port, and the signal; and the network-side device sends the indication information, where the indication information is used to indicate at least one of the following: the information about the antenna element turned on and/or off by the network-side device; the information about the antenna port turned on and/or off by the network-side device; and the information about the signal turned on and/or off by the network-side device. After turning on and/or off the antenna element, the antenna port, or the signal, the network-side device may notify the terminal by using the indication information, so that the terminal performs the corresponding target operation based on the indication information. For example, the terminal is instructed to adjust a behavior such as measurement, transmission, or monitoring of a resource associated with the antenna element or the antenna port, so that the terminal selects an appropriate antenna element or antenna port based on the indication information to perform data transmission, thereby ensuring reliability of data transmission.

In an embodiment of this application, the information about the antenna element includes at least one of the following:
an identifier of the antenna element;
a start antenna element and a quantity of antenna elements;
a first mode of the antenna element, where the first mode of the antenna element corresponds to at least one antenna element;
a second mode of the antenna element, where the second mode of the antenna element is associated with a time when the antenna element is turned on and/or off;
on and/or off duration of the antenna element; and
not turning off any antenna element.

In an embodiment of this application, the information about the antenna port includes at least one of the following:
an identifier of the antenna port;
a start antenna port and a quantity of antenna ports;
a first mode of the antenna port, where the first mode of the antenna port corresponds to at least one antenna port;
a second mode of the antenna port, where the second mode of the antenna port is associated with a time when the antenna port is turned on and/or off;
on and/or off duration of the antenna port; and
not turning off any antenna port.

In an embodiment of this application, the information about the signal includes at least one of the following:
information about a reference signal;
an uplink channel; and
an uplink signal.

In an embodiment of this application, the information about the reference signal includes at least one of the following:
an identifier of the reference signal;
a start reference signal and a quantity of reference signals;
a first mode of the reference signal, where the first mode of the reference signal corresponds to at least one reference signal;
a second mode of the reference signal, where the second mode of the reference signal is associated with a time when the reference signal is turned on and/or off;
on and/or off duration of the reference signal;
a rate matching mode of the reference signal; and
not turning off any reference signal.

In an embodiment of this application, before the network-side device sends the indication information, the method further includes:
the network-side device sends configuration information, where the configuration information includes information about at least one of the antenna element, the antenna port, and the signal.

The configuration information includes at least one of the following:
a global number of each antenna element;
a global number of each antenna port;
a global number of each reference signal;
an association relationship between each antenna element and channel state information CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

In an embodiment of this application, the indication information provides an indication by using at least one of the following:
using a bitmap to indicate the antenna element turned on and/or off by the network-side device;
using a bitmap to indicate the antenna port turned on and/or off by the network-side device;
using a bitmap to indicate the reference signal turned on and/or off by the network-side device;
using a binary value to indicate an identifier of the antenna element turned on and/or off by the network-side device;
using a binary value to indicate an identifier of the antenna port turned on and/or off by the network-side device;
using a binary value to indicate an identifier of the reference signal turned on and/or off by the network-side device;
using a binary value to indicate a quantity of antenna elements turned on and/or off by the network-side device;
using a binary value to indicate a quantity of antenna ports turned on and/or off by the network-side device; and
using a binary value to indicate a quantity of reference signals turned on and/or off by the network-side device.

The information sending method performed by the network-side device and the information responding method performed by the terminal have same technical features. For details, refer to the description in the embodiment of the terminal. Details are not described herein again.

The method provided in this application is hereinafter described by using examples.

### Embodiment 1

As shown in FIG. 4a, an antenna configuration of a network-side device is (M, N, P, Mg, Ng) = (4, 8, 2, 2, 2), that is, each panel of the network-side device has 4 antenna units in a vertical direction and 8 antenna units in a horizontal direction, each antenna unit is dual-polarized, a quantity of panels in vertical domain is 2, and a quantity of panels in horizontal domain is 2. Panels (panel) are grouped based on their geometric positions, where a first panel 41 and a fourth panel 44 are a group, corresponding to a panel group 1 (panel group 1); and a second panel 42 and a third panel 43 are a group, corresponding to a panel group 2 (panel group 2).

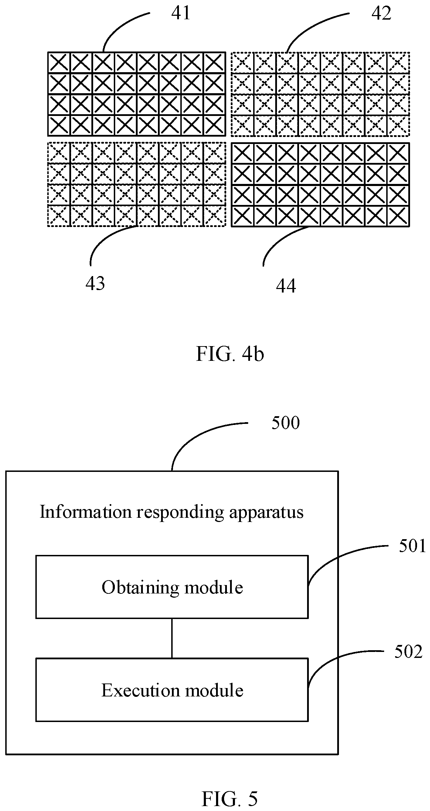

Step 1: The network-side device indicates, by using DCI, that an ID of a panel group turned off is "2", that is, the panel group 2 is indicated, which means that the second panel 42 and the third panel 43 are turned off by the network-side device in this case, as shown in FIG. 4b. In the figure, the second panel 42 and the third panel 43 are dotted lines, indicating that they are turned off.

Step 2: A terminal suspends or cancels a CSI-RS measurement process used for CSI calculation on ports corresponding to the second panel 42 and the third panel 43.

### Embodiment 2

CSI-RSs of a network-side device are globally numbered from 1 to 16. After the network-side device enters a sleep state, a base station turns off some CSI-RS ports according to a rule to save energy.

Assuming that a CSI-RS resource configuration (CSI-RS-Resource Config) 1 configures resources numbered 1-4 in the CSI-RSs, and that a gNB indicates to UE that RS sending with CSI-RS numbers 2 and 3 or corresponding antenna ports is disabled, the UE performs CSI measurement according to the CSI-RS-Resource Config 1, and cancels measurement on resources with the CSI-RS numbers 2 and 3.

Assuming that the CSI-RS-Resource Config 1 includes a resource of a CSI-RS 1, and that a CSI-RS-Resource Config 2 includes a resource of a CSI-RS 2, and so on, and that a CSI-RS-Resource Config 4 includes a resource of a CSI-RS 4, and that the gNB indicates to the UE that RS sending with the CSI-RS 2 and the CSI-RS 3 or the corresponding antenna ports is disabled, the UE performs CSI measurement according to the CSI-RS-Resource Config 1 and the CSI-RS-Resource Config 4, that is, measurement is performed on only resources in which the CSI-RS 1 and the CSI-RS 4 are located.

### Embodiment 3

A network-side device associates an SRS with a CSI-RS in an SRS-spatial relation (SRS-spatial relation) configured for UE by using RRC signaling. When the network-side device enters an energy-saving state, the network-side device turns off the CSI-RS and indicates to the UE that the CSI-RS (port) is turned off.

If the SRS in the SRS-spatial relation is a periodic SRS, the UE recognizes that the CSI-RS is a reference signal associated with the SRS, and the association relationship is indicated by SRS-spatial relation information (SRS-SpatialRelationInfo) configured by the network-side device. The UE cancels subsequent SRS sending based on a port turn-off time indicated by the network-side device.

If the SRS in the SRS-spatial relation is a semi-persistent SRS: if the semi-persistent SRS resource is activated, the network-side device sends a deactivation instruction for the activated SRS resource; or if the semi-persistent SRS resource is not activated, the network-side device does not send an activation instruction for the SRS resource. Herein, turning on may be understood as activation, and turning off may be understood as deactivation.

If the SRS in the SRS-spatial relation is an aperiodic SRS, an SRS Request field in DCI is set to '00', that is, the SRS is not activated. In this case, the UE does not need to send the SRS.

### Embodiment 4

A network-side device associates an SRS with a CSI-RS 1 in an SRS-spatial relation configured for UE 1 by using RRC signaling. When the network-side device enters an energy-saving state and the CSI-RS signal is turned off, the network-side device directly instructs the UE to stop transmission of the SRS by using DCI signaling. For other UE, rate matching on a ZP-CSI-RS corresponding to the UE 1 in the network configuration is canceled.

According to the information sending method in this application, by dynamically turning on and/or off some antenna panels, antenna ports, or signals, the network-side device can save energy. In addition, relevant behaviors on the UE side can be indicated, and behaviors such as measurement, transmission, and monitoring on the antenna panels and antenna ports, or behaviors such as measurement, transmission, and monitoring of signals can be reduced or increased. This can also bring gains to the UE side.

The information responding method provided in the embodiments of this application may be performed by an information responding apparatus. An information responding apparatus provided in the embodiments of this application is described by assuming that the information responding method in the embodiments of this application is performed by the information responding apparatus.

As shown in FIG. 5, an embodiment of this application provides an information responding apparatus. The information responding apparatus 500 includes:
an obtaining module 501, configured to obtain indication information sent by a network-side device; and
an execution module 502, configured to perform a target operation in response to the indication information, where
the indication information is used to indicate at least one of the following:
   information about an antenna element turned on and/or off by the network-side device;
   information about an antenna port turned on and/or off by the network-side device; and
   information about a signal turned on and/or off by the network-side device.

Optionally, the information about the antenna element includes at least one of the following:
an identifier of the antenna element;
a start antenna element and a quantity of antenna elements;
a first mode of the antenna element, where the first mode of the antenna element corresponds to at least one antenna element;
a second mode of the antenna element, where the second mode of the antenna element is associated with a time when the antenna element is turned on and/or off;
on and/or off duration of the antenna element; and
not turning off any antenna element.

Optionally, the information about the antenna port includes at least one of the following:
an identifier of the antenna port;
a start antenna port and a quantity of antenna ports;
a first mode of the antenna port, where the first mode of the antenna port corresponds to at least one antenna port;
a second mode of the antenna port, where the second mode of the antenna port is associated with a time when the antenna port is turned on and/or off;
on and/or off duration of the antenna port; and
not turning off any antenna port.

Optionally, the indication information is used to indicate the information about the antenna element turned off by the network-side device; and
the target operation includes at least one of the following:
canceling measurement of a reference signal resource associated with a first antenna element;
canceling monitoring of a PDCCH on a CORESET associated with the first antenna element;
canceling uplink transmission on a resource corresponding to the first antenna element; and
in a case that the terminal receives a PDSCH, performing rate matching without skipping a reference signal resource corresponding to the first antenna element, where
the first antenna element is the antenna element turned off by the network-side device.

Optionally, the indication information is used to indicate the information about the antenna port turned off by the network-side device; and
the target operation includes at least one of the following:
canceling measurement of a reference signal resource associated with a first antenna port;
canceling monitoring of a physical downlink control channel PDCCH on a control resource set CORESET associated with the first antenna port;
canceling uplink transmission on a resource corresponding to the first antenna port; and
in a case that the terminal receives a physical downlink shared channel PDSCH, performing rate matching without skipping a reference signal resource corresponding to the first antenna port, where
the first antenna port is the antenna port turned off by the network-side device.

Optionally, the information about the signal includes at least one of the following:
information about a reference signal;
an uplink channel; and
an uplink signal.

Optionally, the information about the reference signal includes at least one of the following:
an identifier of the reference signal;
a start reference signal and a quantity of reference signals;
a first mode of the reference signal, where the first mode of the reference signal corresponds to at least one reference signal;
a second mode of the reference signal, where the second mode of the reference signal is associated with a time when the reference signal is turned on and/or off;
on and/or off duration of the reference signal;
a rate matching mode of the reference signal; and
not turning off any reference signal.

Optionally, the indication information is used to indicate the information about the reference signal turned off by the network-side device, and a first reference signal is the reference signal turned off by the network-side device; and
the target operation includes at least one of the following:
canceling measurement of a resource corresponding to the first reference signal;
canceling monitoring of a PDCCH on a CORESET corresponding to the first reference signal;
in a case that the terminal receives a PDSCH, performing rate matching without skipping the resource corresponding to the first reference signal; and
canceling uplink transmission on the resource corresponding to the first reference signal.

Optionally, the obtaining module 501 is configured to perform monitoring based on a preset period or based on an event trigger to obtain the indication information sent by the network-side device.

Optionally, the preset period is a period configured by the network-side device or a monitoring period of a PDCCH carrying the indication information.

Optionally, the event includes one of the following:
a preset timer expires; and
layer 1 reference signal received power L1-RSRP or an SINR of at least one reference signal measured by the terminal in a target cell is lower than a threshold.

Optionally, that at least one L1-RSRP or SINR measured by the terminal in a target cell is lower than a threshold includes:
the L1-RSRP or SINR of the at least one reference signal measured by the terminal in the target cell in at least one time unit is lower than the threshold, where the target cell is a primary cell or a secondary cell of the terminal.

Optionally, the apparatus further includes a receiving module, configured to receive configuration information, where the configuration information includes information about at least one of the antenna element, the antenna port, and the signal.

Optionally, the configuration information includes at least one of the following:
a global number of each antenna element;
a global number of each antenna port;
a global number of each reference signal;
an association relationship between each antenna element and channel state information CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

Optionally, the indication information provides an indication by using at least one of the following:
using a bitmap to indicate the antenna element turned on and/or off by the network-side device;
using a bitmap to indicate the antenna port turned on and/or off by the network-side device;
using a bitmap to indicate the reference signal turned on and/or off by the network-side device;
using a binary value to indicate an identifier of the antenna element turned on and/or off by the network-side device;
using a binary value to indicate an identifier of the antenna port turned on and/or off by the network-side device;
using a binary value to indicate an identifier of the reference signal turned on and/or off by the network-side device;
using a binary value to indicate a quantity of antenna elements turned on and/or off by the network-side device;
using a binary value to indicate a quantity of antenna ports turned on and/or off by the network-side device; and
using a binary value to indicate a quantity of reference signals turned on and/or off by the network-side device.

The information responding apparatus 500 provided in this embodiment of this application can implement each process implemented in the method embodiment in FIG. 2, with the same technical effect achieved. To avoid repetition, details are not described herein again.

The information responding apparatus 500 in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

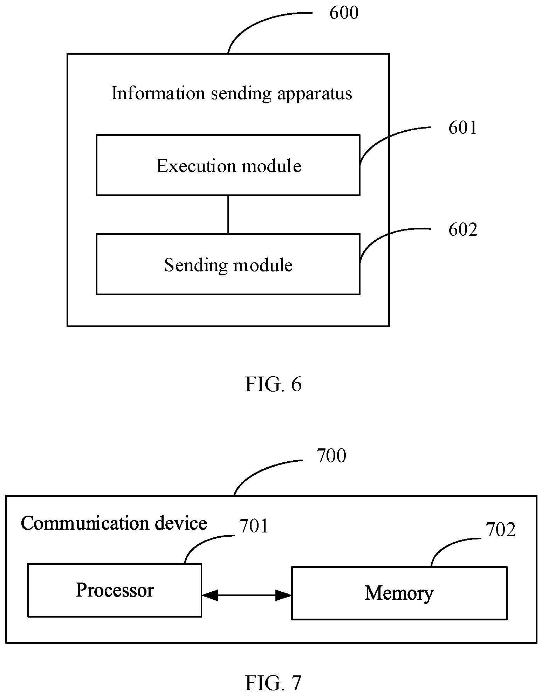

As shown in FIG. 6, an embodiment of this application provides an information sending apparatus. The information sending apparatus 600 includes:
an execution module 601, configured to perform an operation of turning on and/or off at least one of an antenna element, an antenna port, and a signal; and
a sending module 602, configured to send indication information, where the indication information is used to indicate at least one of the following:
   information about the antenna element turned on and/or off by the network-side device;
   information about the antenna port turned on and/or off by the network-side device; and
   information about the signal turned on and/or off by the network-side device.

Optionally, the information about the antenna element includes at least one of the following:
an identifier of the antenna element;
a start antenna element and a quantity of antenna elements;
a first mode of the antenna element, where the first mode of the antenna element corresponds to at least one antenna element;
a second mode of the antenna element, where the second mode of the antenna element is associated with a time when the antenna element is turned on and/or off;
on and/or off duration of the antenna element; and
not turning off any antenna element.

Optionally, the information about the antenna port includes at least one of the following:
an identifier of the antenna port;
a start antenna port and a quantity of antenna ports;
a first mode of the antenna port, where the first mode of the antenna port corresponds to at least one antenna port;
a second mode of the antenna port, where the second mode of the antenna port is associated with a time when the antenna port is turned on and/or off;
on and/or off duration of the antenna port; and
not turning off any antenna port.

Optionally, the information about the signal includes at least one of the following:
information about a reference signal;
an uplink channel; and
an uplink signal.

Optionally, the information about the reference signal includes at least one of the following:
an identifier of the reference signal;
a start reference signal and a quantity of reference signals;
a first mode of the reference signal, where the first mode of the reference signal corresponds to at least one reference signal;
a second mode of the reference signal, where the second mode of the reference signal is associated with a time when the reference signal is turned on and/or off;
on and/or off duration of the reference signal;
a rate matching mode of the reference signal; and
not turning off any reference signal.

Optionally, before the network-side device sends the indication information, the method further includes:
the network-side device sends configuration information, where the configuration information includes information about at least one of the antenna element, the antenna port, and the signal.

Optionally, the configuration information includes at least one of the following:
a global number of each antenna element;
a global number of each antenna port;
a global number of each reference signal;
an association relationship between each antenna element and channel state information CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

Optionally, the indication information provides an indication by using at least one of the following:
using a bitmap to indicate the antenna element turned on and/or off by the network-side device;
using a bitmap to indicate the antenna port turned on and/or off by the network-side device;
using a bitmap to indicate the reference signal turned on and/or off by the network-side device;
using a binary value to indicate an identifier of the antenna element turned on and/or off by the network-side device;
using a binary value to indicate an identifier of the antenna port turned on and/or off by the network-side device;
using a binary value to indicate an identifier of the reference signal turned on and/or off by the network-side device;
using a binary value to indicate a quantity of antenna elements turned on and/or off by the network-side device;
using a binary value to indicate a quantity of antenna ports turned on and/or off by the network-side device; and
using a binary value to indicate a quantity of reference signals turned on and/or off by the network-side device.

The information sending apparatus 600 provided in this embodiment of this application can implement each process implemented in the method embodiment in FIG. 3, with the same technical effect achieved. To avoid repetition, details are not described herein again.

Optionally, as shown in FIG. 7, an embodiment of this application further provides a communication device 700, including a processor 701 and a memory 702. The memory 702 stores a program or instructions capable of running on the processor 701. For example, when the communication device 700 is a terminal, and the program or instructions are executed by the processor 701, each step of the foregoing embodiment of the information responding method shown in FIG. 2 is implemented, with the same technical effect achieved. When the communication device 700 is a network-side device, and the program or instructions are executed by the processor 701, each step of the foregoing embodiment of the information sending method in FIG. 3 is implemented, with the same technical effect achieved. To avoid repetition, details are not described herein again.

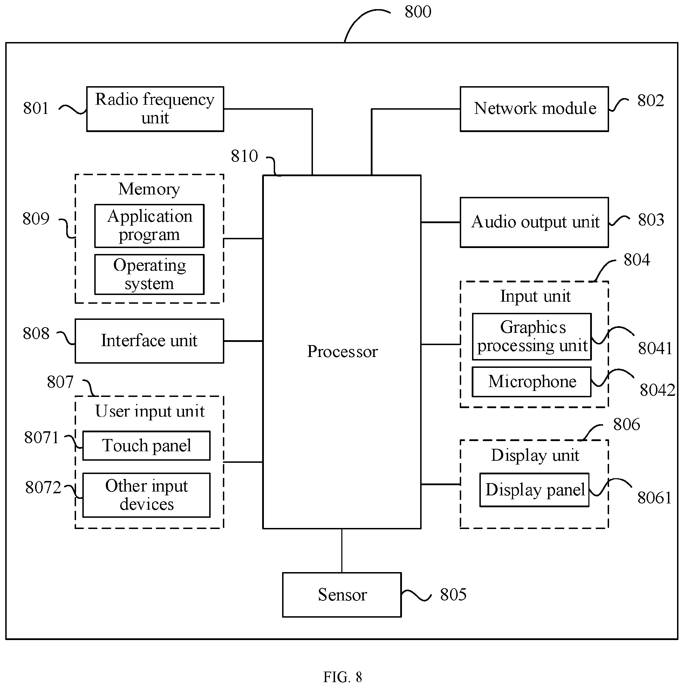

An embodiment of this application further provides a terminal, including a processor and a communication interface. The communication interface is configured to obtain target information sent by a network-side device, where the target information includes indication information and/or mode information, the indication information is used to indicate information about at least one of a beam turned on and a beam turned off by the network-side device, and the mode information is used to indicate a working mode of the network-side device. The processor is configured to perform a target operation based on the target information. The terminal embodiment corresponds to the foregoing terminal-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

The terminal 800 includes but is not limited to at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) supplying power to all components. Optionally, the power supply may be logically connected to the processor 810 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 801 may transmit the downlink data to the processor 810 for processing. In addition, the radio frequency unit 801 may send uplink data to the network-side device. Usually, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may primarily include a first storage area for storing programs or instructions and a second storage area for storing data. The first storage area may store an operating system, an application program or instructions required by at least one function (such as an audio play function and an image play function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 809 in this embodiment of this application includes but is not limited to these and any other suitable types of memories.

The processor 810 may include one or more processing units. Optionally, the processor 810 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 810.

The radio frequency unit 801 is configured to obtain indication information sent by a network-side device.

The processor 810 is configured to perform a target operation in response to the indication information, where
the indication information is used to indicate at least one of the following:
information about an antenna element turned on and/or off by the network-side device;
information about an antenna port turned on and/or off by the network-side device; and
information about a signal turned on and/or off by the network-side device.

Optionally, the information about the antenna element includes at least one of the following:
an identifier of the antenna element;
a start antenna element and a quantity of antenna elements;
a first mode of the antenna element, where the first mode of the antenna element corresponds to at least one antenna element;
a second mode of the antenna element, where the second mode of the antenna element is associated with a time when the antenna element is turned on and/or off;
on and/or off duration of the antenna element; and
not turning off any antenna element.

Optionally, the information about the antenna port includes at least one of the following:
an identifier of the antenna port;
a start antenna port and a quantity of antenna ports;
a first mode of the antenna port, where the first mode of the antenna port corresponds to at least one antenna port;
a second mode of the antenna port, where the second mode of the antenna port is associated with a time when the antenna port is turned on and/or off;
on and/or off duration of the antenna port; and
not turning off any antenna port.

Optionally, the indication information is used to indicate the information about the antenna element turned off by the network-side device; and
the target operation includes at least one of the following:
canceling measurement of a reference signal resource associated with a first antenna element;
canceling monitoring of a PDCCH on a CORESET associated with the first antenna element;
canceling uplink transmission on a resource corresponding to the first antenna element; and
in a case that the terminal receives a PDSCH, performing rate matching without skipping a reference signal resource corresponding to the first antenna element, where
the first antenna element is the antenna element turned off by the network-side device.

Optionally, the indication information is used to indicate the information about the antenna port turned off by the network-side device; and
the target operation includes at least one of the following:
canceling measurement of a reference signal resource associated with a first antenna port;
canceling monitoring of a physical downlink control channel PDCCH on a control resource set CORESET associated with the first antenna port;
canceling uplink transmission on a resource corresponding to the first antenna port; and
in a case that the terminal receives a physical downlink shared channel PDSCH, performing rate matching without skipping a reference signal resource corresponding to the first antenna port, where
the first antenna port is the antenna port turned off by the network-side device.

Optionally, the information about the signal includes at least one of the following:
information about a reference signal;
an uplink channel; and
an uplink signal.

Optionally, the information about the reference signal includes at least one of the following:
an identifier of the reference signal;
a start reference signal and a quantity of reference signals;
a first mode of the reference signal, where the first mode of the reference signal corresponds to at least one reference signal;
a second mode of the reference signal, where the second mode of the reference signal is associated with a time when the reference signal is turned on and/or off;
on and/or off duration of the reference signal;
a rate matching mode of the reference signal; and
not turning off any reference signal.

Optionally, the indication information is used to indicate the information about the reference signal turned off by the network-side device, and a first reference signal is the reference signal turned off by the network-side device; and
the target operation includes at least one of the following:
canceling measurement of a resource corresponding to the first reference signal;
canceling monitoring of a PDCCH on a CORESET corresponding to the first reference signal;
in a case that the terminal receives a PDSCH, performing rate matching without skipping the resource corresponding to the first reference signal; and
canceling uplink transmission on the resource corresponding to the first reference signal.

Optionally, the radio frequency unit 801 is configured to perform monitoring based on a preset period or based on an event trigger to obtain the indication information sent by the network-side device.

Optionally, the preset period is a period configured by the network-side device or a monitoring period of a PDCCH carrying the indication information.

Optionally, the event includes one of the following:
a preset timer expires; and
layer 1 reference signal received power L1-RSRP or an SINR of at least one reference signal measured by the terminal in a target cell is lower than a threshold.

Optionally, that at least one L1-RSRP or SINR measured by the terminal in a target cell is lower than a threshold includes:
the L1-RSRP or SINR of the at least one reference signal measured by the terminal in the target cell in at least one time unit is lower than the threshold, where the target cell is a primary cell or a secondary cell of the terminal.

Optionally, the radio frequency unit 801 is configured to receive configuration information, where the configuration information includes information about at least one of the antenna element, the antenna port, and the signal.

Optionally, the configuration information includes at least one of the following:
a global number of each antenna element;
a global number of each antenna port;
a global number of each reference signal;
an association relationship between each antenna element and channel state information CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

Optionally, the indication information provides an indication by using at least one of the following:
using a bitmap to indicate the antenna element turned on and/or off by the network-side device;
using a bitmap to indicate the antenna port turned on and/or off by the network-side device;
using a bitmap to indicate the reference signal turned on and/or off by the network-side device;
using a binary value to indicate an identifier of the antenna element turned on and/or off by the network-side device;
using a binary value to indicate an identifier of the antenna port turned on and/or off by the network-side device;
using a binary value to indicate an identifier of the reference signal turned on and/or off by the network-side device;
using a binary value to indicate a quantity of antenna elements turned on and/or off by the network-side device;
using a binary value to indicate a quantity of antenna ports turned on and/or off by the network-side device; and
using a binary value to indicate a quantity of reference signals turned on and/or off by the network-side device.

An embodiment of this application further provides a network-side device, including a processor and a communication interface. The communication interface is configured to send indication information, where the indication information is used to indicate at least one of the following: information about an antenna element turned on and/or off by the network-side device; information about an antenna port turned on and/or off by the network-side device; and information about a signal turned on and/or off by the network-side device. The processor is configured to perform an operation of turning on and/or off at least one of the antenna element, the antenna port, and the signal. The network-side device embodiment corresponds to the foregoing method embodiment of the network-side device, and each implementation process and implementation of the foregoing method embodiment can be applied to the network-side device embodiment, with the same technical effect achieved.

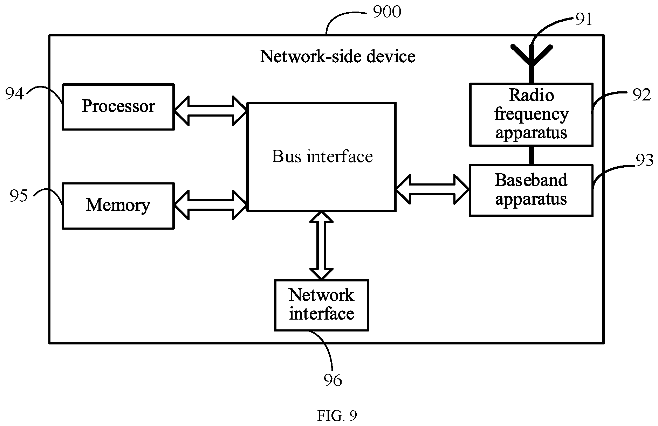

Specifically, an embodiment of this application further provides a network-side device. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The method performed by the network-side device in the foregoing embodiment may be implemented in the baseband apparatus 93. The baseband apparatus 93 includes a baseband processor.

The baseband apparatus 93 may include, for example, at least one baseband unit, where a plurality of chips are disposed on the baseband unit. As shown in FIG. 9, one of the chips is, for example, the baseband processor, connected to the memory 95 by using a bus interface, to invoke a program in the memory 95 to perform the operation of the network device shown in the foregoing method embodiment.

The network-side device may further include a network interface 96, where the interface is, for example, a common public radio interface (common public radio interface, CPRI).

Specifically, the network-side device 900 in this embodiment of this application further includes a program or instructions stored in the memory 95 and capable of running on the processor 94. When the processor 94 invokes the program or instructions in the memory 95, the method performed by each module shown in FIG. 6 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment shown in FIG. 2 or FIG. 3 is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment shown in FIG. 2 or FIG. 3, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment, with the same technical effect achieved. To avoid repetition, details are not described herein again.

An embodiment of this application further provides a communication system, including a terminal and a network-side device. The terminal may be configured to perform the steps of the information responding method in the foregoing embodiment shown in FIG. 2. The network-side device may be configured to perform the steps of the information sending method in the foregoing embodiment shown in FIG. 3.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An information responding method, comprising:
obtaining, by a terminal, indication information sent by a network-side device; and
performing, by the terminal, a target operation in response to the indication information, wherein
the indication information is used to indicate at least one of the following:
information about an antenna element turned on and/or off by the network-side device;
information about an antenna port turned on and/or off by the network-side device; and
information about a signal turned on and/or off by the network-side device.

2. The method according to claim 1, wherein the information about the antenna element comprises at least one of the following:
an identifier of the antenna element;
a start antenna element and a quantity of antenna elements;
a first mode of the antenna element, wherein the first mode of the antenna element corresponds to at least one antenna element;
a second mode of the antenna element, wherein the second mode of the antenna element is associated with a time when the antenna element is turned on and/or off;
on and/or off duration of the antenna element; and
not turning off any antenna element.

3. The method according to claim 1, wherein the information about the antenna port comprises at least one of the following:
an identifier of the antenna port;
a start antenna port and a quantity of antenna ports;
a first mode of the antenna port, wherein the first mode of the antenna port corresponds to at least one antenna port;
a second mode of the antenna port, wherein the second mode of the antenna port is associated with a time when the antenna port is turned on and/or off;
on and/or off duration of the antenna port; and
not turning off any antenna port.

4. The method according to claim 1, wherein the indication information is used to indicate the information about the antenna element turned off by the network-side device; and
the target operation comprises at least one of the following:
canceling measurement of a reference signal resource associated with a first antenna element;
canceling monitoring of a PDCCH on a CORESET associated with the first antenna element;
canceling uplink transmission on a resource corresponding to the first antenna element; and
in a case that the terminal receives a PDSCH, performing rate matching without skipping a reference signal resource corresponding to the first antenna element, wherein
the first antenna element is the antenna element turned off by the network-side device.

5. The method according to claim 1, wherein the indication information is used to indicate the information about the antenna port turned off by the network-side device; and
the target operation comprises at least one of the following:
canceling measurement of a reference signal resource associated with a first antenna port;
canceling monitoring of a physical downlink control channel PDCCH on a control resource set CORESET associated with the first antenna port;
canceling uplink transmission on a resource corresponding to the first antenna port; and
in a case that the terminal receives a physical downlink shared channel PDSCH, performing rate matching without skipping a reference signal resource corresponding to the first antenna port, wherein
the first antenna port is the antenna port turned off by the network-side device.

6. The method according to claim 1, wherein the information about the signal comprises at least one of the following:
information about a reference signal;
an uplink channel; and
an uplink signal.

7. The method according to claim 6, wherein the information about the reference signal comprises at least one of the following:
an identifier of the reference signal;
a start reference signal and a quantity of reference signals;
a first mode of the reference signal, wherein the first mode of the reference signal corresponds to at least one reference signal;
a second mode of the reference signal, wherein the second mode of the reference signal is associated with a time when the reference signal is turned on and/or off;
on and/or off duration of the reference signal;
a rate matching mode of the reference signal; and
not turning off any reference signal.

8. The method according to claim 6, wherein the indication information is used to indicate the information about the reference signal turned off by the network-side device, and a first reference signal is the reference signal turned off by the network-side device; and
the target operation comprises at least one of the following:
canceling measurement of a resource corresponding to the first reference signal;
canceling monitoring of a PDCCH on a CORESET corresponding to the first reference signal;
in a case that the terminal receives a PDSCH, performing rate matching without skipping the resource corresponding to the first reference signal; and
canceling uplink transmission on the resource corresponding to the first reference signal.

9. The method according to claim 1, wherein the obtaining, by a terminal, indication information sent by a network-side device comprises:
performing, by the terminal, monitoring based on a preset period or based on an event trigger to obtain the indication information sent by the network-side device.

10. The method according to claim 9, wherein the preset period is a period configured by the network-side device or a monitoring period of a PDCCH carrying the indication information.

11. The method according to claim 9, wherein the event comprises one of the following:
a preset timer expires; and
layer 1 reference signal received power L1-RSRP or a signal to interference plus noise ratio SINR of at least one reference signal measured by the terminal in a target cell is lower than a threshold.

12. The method according to claim 11, wherein that at least one L1-RSRP or SINR measured by the terminal in a target cell is lower than a threshold comprises:
the L1-RSRP or SINR of the at least one reference signal measured by the terminal in the target cell in at least one time unit is lower than the threshold, wherein the target cell is a primary cell or a secondary cell of the terminal.

13. The method according to claim 1, wherein before the obtaining, by a terminal, indication information, the method further comprises:
receiving, by the terminal, configuration information, wherein the configuration information comprises information about at least one of the antenna element, the antenna port, and the signal.

14. The method according to claim 13, wherein the configuration information comprises at least one of the following:
a global number of each antenna element;
a global number of each antenna port;
a global number of each reference signal;
an association relationship between each antenna element and channel state information CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

15. The method according to claim 1, wherein the indication information provides an indication by using at least one of the following:
using a bitmap to indicate the antenna element turned on and/or off by the network-side device;
using a bitmap to indicate the antenna port turned on and/or off by the network-side device;
using a bitmap to indicate the reference signal turned on and/or off by the network-side device;
using a binary value to indicate an identifier of the antenna element turned on and/or off by the network-side device;
using a binary value to indicate an identifier of the antenna port turned on and/or off by the network-side device;
using a binary value to indicate an identifier of the reference signal turned on and/or off by the network-side device;
using a binary value to indicate a quantity of antenna elements turned on and/or off by the network-side device;
using a binary value to indicate a quantity of antenna ports turned on and/or off by the network-side device; and
using a binary value to indicate a quantity of reference signals turned on and/or off by the network-side device.

16. An information sending method, comprising:
performing, by a network-side device, an operation of turning on and/or off at least one of an antenna element, an antenna port, and a signal; and
sending, by the network-side device, indication information, wherein the indication information is used to indicate at least one of the following:
information about the antenna element turned on and/or off by the network-side device;
information about the antenna port turned on and/or off by the network-side device; and
information about the signal turned on and/or off by the network-side device.

17. The method according to claim 16, wherein the information about the antenna element comprises at least one of the following:
an identifier of the antenna element;
a start antenna element and a quantity of antenna elements;
a first mode of the antenna element, wherein the first mode of the antenna element corresponds to at least one antenna element;
a second mode of the antenna element, wherein the second mode of the antenna element is associated with a time when the antenna element is turned on and/or off;
on and/or off duration of the antenna element; and
not turning off any antenna element.

18. The method according to claim 16, wherein the information about the antenna port comprises at least one of the following:
an identifier of the antenna port;
a start antenna port and a quantity of antenna ports;
a first mode of the antenna port, wherein the first mode of the antenna port corresponds to at least one antenna port;
a second mode of the antenna port, wherein the second mode of the antenna port is associated with a time when the antenna port is turned on and/or off;
on and/or off duration of the antenna port; and
not turning off any antenna port.

19. The method according to claim 16, wherein the information about the signal comprises at least one of the following:
information about a reference signal;
an uplink channel; and
an uplink signal.

20. The method according to claim 19, wherein the information about the reference signal comprises at least one of the following:
an identifier of the reference signal;
a start reference signal and a quantity of reference signals;
a first mode of the reference signal, wherein the first mode of the reference signal corresponds to at least one reference signal;
a second mode of the reference signal, wherein the second mode of the reference signal is associated with a time when the reference signal is turned on and/or off;
on and/or off duration of the reference signal;
a rate matching mode of the reference signal; and
not turning off any reference signal.

21. The method according to claim 16, wherein before the sending, by the network-side device, indication information, the method further comprises:
sending, by the network-side device, configuration information, wherein the configuration information comprises information about at least one of the antenna element, the antenna port, and the signal.

22. The method according to claim 21, wherein the configuration information comprises at least one of the following:
a global number of each antenna element;
a global number of each antenna port;
a global number of each reference signal;
an association relationship between each antenna element and channel state information CSI measurement;
an association relationship between each antenna port and CSI measurement;
an association relationship between each reference signal and CSI measurement;
an association relationship between each antenna element and a CORESET;
an association relationship between each antenna port and a CORESET;
an association relationship between each reference signal and a CORESET;
an association relationship between each antenna element and uplink transmission;
an association relationship between each antenna port and uplink transmission;
an association relationship between each reference signal and uplink transmission;
an association relationship between each antenna element and downlink transmission;
an association relationship between each antenna port and downlink transmission; and
an association relationship between each reference signal and downlink transmission.

23. The method according to claim 16, wherein the indication information provides an indication by using at least one of the following:
using a bitmap to indicate the antenna element turned on and/or off by the network-side device;
using a bitmap to indicate the antenna port turned on and/or off by the network-side device;
using a bitmap to indicate the reference signal turned on and/or off by the network-side device;
using a binary value to indicate an identifier of the antenna element turned on and/or off by the network-side device;
using a binary value to indicate an identifier of the antenna port turned on and/or off by the network-side device;
using a binary value to indicate an identifier of the reference signal turned on and/or off by the network-side device;
using a binary value to indicate a quantity of antenna elements turned on and/or off by the network-side device;
using a binary value to indicate a quantity of antenna ports turned on and/or off by the network-side device; and
using a binary value to indicate a quantity of reference signals turned on and/or off by the network-side device.

24. An information responding apparatus, comprising:
an obtaining module, configured to obtain indication information sent by a network-side device; and
an execution module, configured to perform a target operation in response to the indication information, wherein
the indication information is used to indicate at least one of the following:
information about an antenna element turned on and/or off by the network-side device;
information about an antenna port turned on and/or off by the network-side device; and
information about a signal turned on and/or off by the network-side device.

25. The apparatus according to claim 24, wherein the information about the antenna element comprises at least one of the following:
an identifier of the antenna element;
a start antenna element and a quantity of antenna elements;
a first mode of the antenna element, wherein the first mode of the antenna element corresponds to at least one antenna element;
a second mode of the antenna element, wherein the second mode of the antenna element is associated with a time when the antenna element is turned on and/or off;
on and/or off duration of the antenna element; and
not turning off any antenna element.

26. An information sending apparatus, comprising:
an execution module, configured to perform an operation of turning on and/or off at least one of an antenna element, an antenna port, and a signal; and
a sending module, configured to send indication information, wherein the indication information is used to indicate at least one of the following:
information about the antenna element turned on and/or off by the network-side device;
information about the antenna port turned on and/or off by the network-side device; and
information about the signal turned on and/or off by the network-side device.

27. The apparatus according to claim 26, wherein the information about the antenna element comprises at least one of the following:
an identifier of the antenna element;
a start antenna element and a quantity of antenna elements;
a first mode of the antenna element, wherein the first mode of the antenna element corresponds to at least one antenna element;
a second mode of the antenna element, wherein the second mode of the antenna element is associated with a time when the antenna element is turned on and/or off;
on and/or off duration of the antenna element; and
not turning off any antenna element.

28. A terminal, comprising a processor and a memory, wherein the memory stores a program or instructions capable of running on the processor, and when the program or instructions are executed by the processor, the steps of the information responding method according to any one of claims 1 to 15 are implemented.

29. A network-side device, comprising a processor and a memory, wherein the memory stores a program or instructions capable of running on the processor, and when the program or instructions are executed by the processor, the steps of the information sending method according to any one of claims 16 to 23 are implemented.

30. A readable storage medium, wherein the readable storage medium stores a program or instructions, and when the program or instructions are executed by a processor, the steps of the information responding method according to any one of claims 1 to 15 are implemented, or the steps of the information sending method according to any one of claims 16 to 23 are implemented.
